# EUROPÄISCHE PATENTSCHRIFT

(11) **EP 0 734 981 B1**
(45) Veröffentlichungstag und Bekanntmachung des Hinweises auf die Patenterteilung: **27.05.1998**
(21) Anmeldenummer: 96890054.8
(22) Anmeldetag: 21.03.1996
(51) Int. Cl.: B65G 47/04, B65G 1/137

(54) **Beladevorrichtung**
Loading device
Dispositif de chargement

(30) Priorität: 31.03.1995 AT 581/95
(43) Veröffentlichungstag der Anmeldung: 02.10.1996
(73) Patentinhaber: P.E.E.M. Förderanlagen Ges.m.b.H., 8051 Graz (AT)
(72) Erfinder: Neukam, Helmut, 8071 Hausmannstätten (AT)
(74) Vertreter: Kliment, Peter, Dipl.-Ing.

(56) Entgegenhaltungen:
- DE-A- 2 144 516

## Beschreibung

Die Erfindung bezieht sich auf eine Beladevorrichtung, insbesondere für die Beladung von auf einer Transportbahn beförderten Transportbehältern, bei welcher Vorrichtung ein in vertikaler Richtung festgelegter mit einem im Bereich seiner Ausgabeöffnung angeordnetem Verschluß versehener Trichter vorgesehen ist.

Bei solchen Beladevorrichtungen, wie sie häufig in automatischen Kommissionieranlagen verwendet werden, ergibt sich stets das Problem, daß entweder nur gleich hohe Transportbehälter verwendet werden können, was bei Kommissionen mit nur wenigen kleinen Warenstücken oft unerwünscht ist, oder es besteht die Gefahr, daß Warenstücke bei einer größeren Freifallstrecke, wie sie sich bei niedrigeren Transportbehälter ergibt, neben einen bereitgestellten Transportbehälter fallen und daher eine Kommission unvollständig versandt wird.

Ziel der Erfindung ist es, diese Nachteile zu vermeiden und eine Beladevorrichtung der eingangs erwähnten Art vorzuschlagen, bei der problemlos Transportbehälter unterschiedlicher Höhe verwendet werden können und trotzdem eine sehr weitgehende Sicherheit gegeben ist, daß alle aus dem Trichter fallenden Einzelstücke in den dafür vorgesehenen Transportbehälter fallen.

Erfindungsgemäß wird dies bei einer Beladevorrichtung der eingangs erwähnten Art dadurch erreicht, daß in Transportrichtung der Transportbehälter vor und hinter dem Trichter verstellbare Abdeckelemente, z.B. Schieber angeordnet sind, die nahe an die Oberkanten der gegebenenfalls unterschiedliche Abmessungen in vertikaler Richtung aufweisenden Transportbehälter anstellbar sind.

Durch die vorgesehenen Abdeckeinrichtungen kann der Abstand zwischen der Mündung des Trichters und der Oberkante eines niedrigeren Transportbehälters auf einfache Weise abgedeckt werden, sodaß einzelne Warenstücke nicht neben den bereitgestellten Transportbehälter fallen können und auch nicht nach dem Auftreffen auf dem Boden des Transportbehälters aus diesem herausspringen können. Als Abdeckelemente sind Schieber besonders zweckmäßig, doch können z.B. auch flexible Lappen od.dgl. vorgesehen werden, deren Unterkante mehr oder weniger weit abgesenkt werden kann. Voraussetzung bei einer solchen Lösung ist, daß die Lappen zwar aus einem flexiblen, aber relativ schwerem Material hergestellt sind, wie z.B. Kunstgummi od. dgl.

Als Antriebe für die Schieber können zweckmäßigerweise mit einem Druckmedium beaufschlagbare Zylinder-Kolbenanordnungen vorgesehen sein. Grundsätzlich können aber auch andere Antriebe vorgesehen sein, z.B. können Elektromotore, die einen mit einem Schieber verbundenen Seilzug antreiben, verwendet werden.

Durch die Merkmale des Anspruches 2 können die Schieber in einem geringen Abstand vom Trichter angeordnet werden, wobei sichergestellt werden kann, daß der lichte Abstand der unteren Kanten der Schieber in einer den niedrigeren Transportbehältern entsprechenden Stellung im wesentlichen der lichten Weite des betreffenden Transportbehälters entspricht. Dadurch wird ein Herausfallen von Warenstücken aus dem niedrigeren Transportbehälter sicher verhindert.

Durch die Merkmale des Anspruches 3 wird ein Herausspringen von einzelnen Warenstücken aus einem niedrigeren Transportbehälter sicher vermieden, wobei gleichzeitig eine ordnungsgemäße Ausrichtung der Transportbehälter im Bereich des Trichters erreicht wird.

Bei einem Trichterverschluß gemäß dem Anspruch 4 ergibt sich der Vorteil einer in konstruktiver Hinsicht sehr einfachen Lösung, bei der ein Herausfallen von Warenstücken bei der Befüllung von niedrigeren Transportbehältern sicher verhindert ist.

Die Erfindung wird nun anhand der Zeichnung näher erläutert. Dabei zeigen:
Fig. 1 schematisch eine erfindungsgemäße Beladevorrichtung in Seitenansicht mit geschnitten dargestelltem Trichter und
Fig. 2 schematisch eine Stirnansicht der Beladevorrichtung nach der Fig. 1 mit geschnitten dargestelltem Trichter.

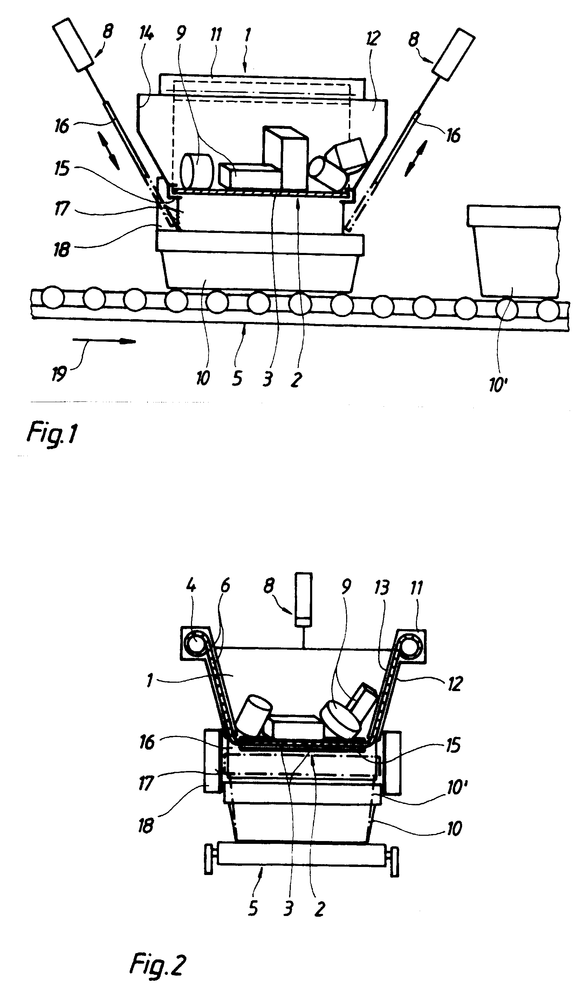

Bei einer erfindungsgemäßen Beladevorrichtung ist ein Trichter 1 vorgesehen, der mit einem Verschluß 2 versehen ist. Dieser Verschluß 2 ist durch zwei Bahnen 3 gebildet, die aus mittels einer Gewebebahn miteinander flexibel verbundenen Lamellen 6 hergestellt sind und auf antreibbaren Walzen 4, die in Längsrichtung einer Transportbahn 5 verlaufen, aufwickelbar sind. Diese Walzen 4 sind in seitlich des oberen Randes des Trichters 1 angeordneten Gehäusen 11 samt einem nicht dargestellten Antrieb angeordnet (Fig. 2).

Die Bahnen 3 verlaufen im Inneren des Trichters 1 und sind im Bereich der Seitenwände 12 des Trichters 1 von einer haubenartigen Abdeckung 13 überdeckt. Im Bereich der Stirnseiten 14 des Trichters 1, die im wesentlichen quer zur Transportbahn 5 verlaufen, sind die den Verschluß 2 bildenden Bahnen 3 in Führungen 15 gehalten, wobei die Bahnen 3 im geschlossenen Zustand den Boden des Trichters bilden und Warenstücke 9 abstützen.

An beiden parallel zur Transportbahn 5 verlaufenden Seitenwänden 12 des Trichters 1 sind Schürzen 17 vorgesehen, die sich beim dargestellten Ausführungsbeispiel bis unter die Oberkante der niedrigeren Transportbehälter 10 erstrecken. Dabei verbleibt zwischen den Außenwänden der Transportbehälter 10, 10', die unterschiedlich hoch ausgebildet sind, nur ein sehr kleiner Spalt, sodaß die Transportbehälter 10, 10' zwischen diesen Schürzen 17 geführt sind (Fig. 2). Dadurch ist auch sichergestellt, daß keine Warenstücke 9 beim Befüllen der Transportbehälter 10, die eine geringere Höhe als die Transportbehälter 10' aufweisen, aus den ersteren herausspringen können.

Die Schürzen 17 sind mit Einlaufblechen 18 verbunden, die gegen die Transportrichtung 19 schräg nach außen geneigt verlaufen und das Hineingleiten der Transportbehälter 10, 10' in den vin den Schürzen 17 begrenzten Bereich erleichtern. Beim dargestellten Ausführungsbeispiel ist der Übergang von einer Schürze 17 zum zugeordneten, einstückig angeformten Einlaufblech 18 durch einen Knick 20 gebildet.

Weiters sind, in Transportrichtung der Transportbahn 5 gesehen, vor und hinter den Stirnseiten 14 des Trichters 1 Schieber 16 angeordnet, die mittels Zylinder-Kolbenanordnungen 8 verstellbar sind. Dadurch ist sichergestellt, daß auch im Bereich der Stirnseiten der Transportbehälter 10, 10' keine Warenstücke 9 herausfallen können.

Eine Beladung eines Transportbehälters 10, 10' erfolgt in der Weise, daß sobald ein solcher eine Position unterhalb des Trichters 1 erreicht hat, die beiden Bahnen 3 auf die Walzen 4 aufgewickelt werden, wodurch die Warenstücke 9 nach unten in den bereitgestellten Transportbehälter 10, 10' fallen. Dabei sind die Schieber 16 auf eine dem jeweiligen Transportbehälter 10, 10' entsprechende Höhe eingestellt, sodaß nur ein geringer Abstand zwischen der Oberkante des Transportbehälters 10, 10' und der Unterkante des Schiebers 16, bzw. der Unterseite des Trichters 1 verbleibt.

Nach der Befüllung eines Transportbehälters 10, 10' werden die Bahnen 3 wieder von den Walzen 4 abgewickelt, wodurch sich diese aufgrund der Führung in den Abdeckungen 13 und den Führungen 15 wieder zusammenschieben und die Öffnung des Trichters 1 verschließen, sodaß für eine weitere Kommission vorgesehen Warenstücke 9 in den Trichter 1 eingebracht werden können. Letzteres kann z.B. mittels eines Förderbandes (nicht dargestellt) erfolgen.

## Patentansprüche

1. Beladevorrichtung, insbesondere für die Beladung von auf einer Transportbahn (5) beförderten Transportbehältern (10, 10'), bei welcher Vorrichtung ein in vertikaler Richtung festgelegter mit einem im Bereich seiner Ausgabeöffnung angeordnetem Verschluß (2) versehener Trichter (1) vorgesehen ist, **dadurch gekennzeichnet**, daß in Transportrichtung der Transportbehälter (10, 10') vor und hinter dem Trichter (1) verstellbare Abdeckelemente, z.B. Schieber (16) angeordnet sind, die nahe an die Oberkanten der gegebenenfalls unterschiedliche Abmessungen in vertikaler Richtung aufweisenden Transportbehälter (10, 10') anstellbar sind.

2. Beladevorrichtung nach Anspruch 1, **dadurch gekennzeichnet**, daß die Schieber (16) angenähert parallel zu den schräg geneigten Seitenwänden (12, 14) des Trichters (1) verstellbar sind.

3. Beladevorrichtung nach Anspruch 1 oder 2, **dadurch gekennzeichnet**, daß am Trichter (1) nach unten ragende Schürzen (17) angeordnet sind, die sich im wesentlichen parallel zur Förderrichtung der Transportbehälter (10, 10') erstrecken und zumindest nahe an die Oberkante der niedrigeren Transportbehälter (10), vorzugsweise aber bis unter deren Oberkante, reichen, wobei die Transportbehälter (10, 10') zwischen den Schürzen (17) geführt sind und die Schürzen (17) vorzugsweise mit gegen die Transportrichtung schräg nach außen geneigten Einlaufblechen (18) verbunden sind.

4. Beladevorrichtung nach einem der Ansprüche 1 bis 3, **dadurch gekennzeichnet**, daß der Verschluß (2) des Trichters (1) durch miteinander mittels einer flexiblen Bahn (3), z.B. einer Gewebebahn, verbundene Lamellen (6) gebildet ist, wobei der Verschluß (2) auf mindestens eine antreibbare Walze (4) aufwickelbar ist und Schieber (16) parallel und quer zur Förderrichtung der Transportbahn (5) angeordnet sind.

## Claims

1. Loading device, particularly for loading containers (10, 10') carried on a conveying device (5), including a funnel (1) fixed in the vertical dimension, with a shutter (2) arranged in the area of its delivery aperture, **characterized in that** adjustable covering elements, such as slides (16), are arranged before and after the funnel (1), viewed in the transport direction of the containers (10, 10'), which covering elements can be positioned close to the upper rims of the containers (10, 10'), which may vary in their vertical dimensions.

2. Loading device according to claim 1, **characterized in that** the slides (16) are adjustable in a direction substantially parallel to the sloping sidewalls (12, 14) of the funnel (1).

3. Loading device according to claim 1 or claim 2, **characterized in that** guard plates (17) extending downwards are mounted to the funnel (1), which guard plates (17) proceed substantially parallel to the conveying direction of the containers (10, 10') and which extend at least close to the upper rim of the lower containers (10) but preferably extend below said upper rim, the containers (10, 10') thereby being guided between the guard plates (17), and the guard plates (17) preferably being connected to slanting outwardly guiding plates (18).

4. Loading device according to any one of the claims 1 to 3, **characterized in that** the shutter (2) of the funnel (1) is formed by lamellar segments (6) interconnected by a flexible strip (3), such as a strip of textile fabric, the shutter (2) thereby allowing to be rolled up on at least one roller (4), which may be actuated, and slides (16) being arranged parallel as well as perpendicular to the conveying direction of the conveying device (5).

## Revendications

1. Dispositif de chargement, notamment pour chargement de récipients de transport (10, 10') convoyés sur une voie de transport (5), dans lequel il est prévu une trémie (1) qui est fixée dans la direction verticale et comporte un dispositif de fermeture (2) au niveau de son ouverture de sortie, caractérisé en ce qu'en amont et en aval de la trémie (1), dans la direction de transport des récipients de transport (10, 10'), sont disposés des éléments de recouvrement déplaçables, par exemple des tiroirs (16), qui peuvent être amenés à proximité des bords supérieurs des récipients de transport (10, 10'), qui possèdent éventuellement des dimensions différentes dans la direction verticale.

2. Dispositif de chargement selon la revendication 1, caractérisé en ce que les tiroirs (16) sont déplaçables approximativement parallèlement aux parois latérales obliques (12, 14) de la trémie (1).

3. Dispositif de chargement selon la revendication 1 ou 2, caractérisé en ce que sur la trémie (1) sont disposés des panneaux (17), qui s'étendent vers le bas et sont essentiellement parallèles à la direction de convoyage des récipients de transport (10, 10') et s'étendent au moins à proximité du bord supérieur des récipients de transport (10) plus bas, mais de préférence jusqu'à leur bord supérieur, les récipients de transport (10, 10') étant guidés entre les panneaux (17) et les panneaux (17) étant reliés de préférence à des tôles d'introduction (18) qui sont inclinées vers l'extérieur par rapport à la direction de transport.

4. Dispositif de chargement selon l'une des revendications 1 à 3, caractérisé en ce que le dispositif de fermeture (2) de la trémie (1) est formé par des lamelles (6), qui sont reliées entre elles au moyen d'une bande flexible (3), par exemple d'une bande de tissu, le dispositif de fermeture (2) pouvant être enroulé sur au moins un rouleau (4) pouvant être entraîné, et des tiroirs (16) étant disposés parallèlement et transversalement à la direction d'entraînement de la bande de transport (5).
